(19) Europäisches Patentamt
European Patent Office
Office européen des brevets

(11) **EP 3 123 111 B1**

(12) **FASCICULE DE BREVET EUROPEEN**

(45) Date de publication et mention
de la délivrance du brevet:
**23.08.2023   Bulletin 2023/34**

(51) Classification Internationale des Brevets (IPC):
*G01C 21/20* (2006.01)     *G06Q 10/047* (2023.01)
*G06Q 50/28* (2012.01)     *G01S 5/02* (2010.01)

(21) Numéro de dépôt: **15717563.9**

(52) Classification Coopérative des Brevets (CPC):
**G01C 21/206; G01S 5/0205; G06Q 10/047;
G06Q 50/28**

(22) Date de dépôt: **25.03.2015**

(86) Numéro de dépôt international:
**PCT/FR2015/050756**

(87) Numéro de publication internationale:
**WO 2015/145070 (01.10.2015 Gazette 2015/39)**

(54) **PROCÉDÉ D'ASSISTANCE AU DÉPLACEMENT D'UN AGENT DANS UN ENVIRONNEMENT INTÉRIEUR**

**VERFAHREN ZUR UNTERSTÜTZUNG DER BEWEGUNG EINES AGENTEN IN EINER INNENRAUMUMGEBUNG**

**METHOD FOR ASSISTING THE MOVEMENT OF AN AGENT IN AN INTERIOR ENVIRONMENT**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **26.03.2014  FR 1452595**

(43) Date de publication de la demande:
**01.02.2017   Bulletin 2017/05**

(73) Titulaire: **Bull SAS
78340 Les Clayes-sous-Bois (FR)**

(72) Inventeur: **DALE, Franck
F-13310 Saint-Martin-de-Crau (FR)**

(74) Mandataire: **Cabinet Camus Lebkiri
25 rue de Maubeuge
75009 Paris (FR)**

(56) Documents cités:
**EP-A2- 2 148 167        US-A1- 2011 081 922
US-A1- 2011 176 523     US-B1- 8 320 939**

**Description**

**DOMAINE TECHNIQUE DE L'INVENTION**

L'invention se rapporte à un procédé d'assistance au déplacement d'un agent dans un environnement intérieur. L'invention se rapporte également à un dispositif mettant en oeuvre ledit procédé ainsi qu'à un support sur lequel sont enregistrés des codes instructions correspondant à une mise en oeuvre dudit procédé.

On entendra par agent dans le cadre de la présente demande toute personne ou tout dispositif susceptible de se déplacer dans une zone prédéterminée. Une zone prédéterminée est, par exemple, un entrepôt de marchandises, un centre de données ou « Datacenter » et plus généralement tout bâtiment ou zone de stockage de marchandises. Le système peut se décliner dans les domaines médicaux ainsi que dans le domaine du data mining

Le domaine de l'invention est celui de l'assistance au déplacement dans des zones de stockage ou d'exploitation industrielle. De telles zones sont, par exemple, les centres de données, les magasins de type « conduire à l'intérieur », des entrepôts de marchandises. Un magasin de type « conduire à l'intérieur » est un magasin dans lequel un client n'entre pas mais soumet une commande, comportant une pluralité d'article stockés dans un entrepôt, et passe la prendre une fois qu'elle a été constituée pour lui. Ces magasins sont aussi appelés des « drive ». On parle aussi de « service à l'auto ».

**ETAT DE LA TECHNIQUE ANTERIEURE**

Dans l'état de la technique les magasins de type « conduire à l'intérieur » connaissent une croissance importante. Ils permettent en effet à leurs utilisateurs de ne pas avoir à parcourir des rayonnages d'articles pour remplir un caddy en fonction de leurs besoins. Ils permettent aussi à ces mêmes utilisateurs de ne pas avoir à faire la queue au moment du règlement de leur achat. De même, du point de vu d'un utilisateur un magasin de type « conduire à l'intérieur » limite le nombre de manutentions requis pour l'obtention des articles puisque ces articles n'ont pas à être présentés à un agent de caisse. Du point de vu de l'utilisateur tous les problèmes de manutention et de stockage / déstockage sont reporté sur le fournisseur.

Du point de vue du fournisseur les avantages d'un magasin organisé en « conduire à l'intérieur » sont importants :

- Pas de coût de présentation des articles
- Surface de parking réduite,
- Surface de caisse réduite,

Par contre le fournisseur doit faire face à de nouveaux défis logistiques. Ces défis tournent tous autour de la gestion de l'espace de stockage et de l'orientation dans la zone correspondante.

A l'heure actuelle on effectue une transposition de l'organisation standard vers l'organisation « service à l'auto ». C'est-à-dire qu'un agent remplace les utilisateurs standards en reproduisant leurs aptitudes à se déplacer aux milieux de rayonnages. L'expérience, et donc l'ancienneté de l'agent, ses facultés d'adaptation à un environnement évolutif, sont des facteurs clés de son efficacité.

Des problèmes d'efficacité se posent avec l'introduction de nouveaux agents et avec l'évolution de la topologie de la zone de stockage. Ces problèmes se traduisent par l'augmentation du temps requis pour la constitution d'une commande.

La constitution d'une commande est le fait de parcourir une zone de stockage pout y trouver les articles correspondant à la commande qui est une liste d'articles. Dans les cas les meilleurs, cette constitution est réalisée à l'aide d'un assistant informatique qui liste des articles en indiquant des coordonnées, sous forme d'un identifiant de rangée et éventuellement d'un identifiant de colonne. L'agent recherche alors dans l'entrepôt des identifiants pour trouver l'article, puis il passe au suivant. Dans le temps la difficulté est que ces identifiants sont attachés à des structures qui peuvent bouger, ou attachés à des éléments de structures qui, selon la position de l'agent, peuvent être invisibles.

C'est pour cela que la plupart des agents ignorent les indications visuelles et se fient à leur expérience, ou à leur inexpérience, pour se déplacer dans l'entrepôt de manière aléatoirement efficace. La plus grande difficulté survient quand un article change d'emplacement de stockage.

De même l'agent n'a aucune aide pour optimiser sa « tournée » de constitution d'une commande.

Il en résulte des congestions, surtout aux moments de fréquentation élevée, dans les zones de livraisons dont la surface doit être étendue sous peine d'avoir des véhicules stationnant sur des voies de circulation.

Une solution serait d'utiliser une solution de guidage qui permettrait de guider l'agent lors de la constitution d'une commande. De telles solutions semblent exister, on pense par exemple aux systèmes GPS ou basé sur des bornes Wifi.

Mais ces systèmes soit ne marchent pas en intérieur, c'est le cas du GPS, soit sont inadaptés à des environnements évolutifs. Cette dernière limitation est propre à tous les systèmes existant : ils présupposent l'existence d'une carte sur laquelle appuyer le calcul d'un itinéraire et cette carte est statique. Si un obstacle bouge ou apparaît il faut effectuer une mise à jour du système, tout comme on effectue des mises à jours des systèmes GPS pour qu'ils prennent en compte les nouveaux axes routiers et la nouvelle signalisation routière.

Aucun système existant n'est donc adapté aux cas envisagés. Le document US 2011/081922 A1 décrit un procédé qui associe les cellules d'un réseau de téléphonie mobile d'une zone donnée à un graphe en se basant sur des messages radio échangés entre les stations de base et les dispositifs de télécommunication mobiles. Chaque cellule est associée à un sommet du graphe stocké dans une base de données.

Le document US 8 320 939 B1 décrit un procédé d'assistance au déplacement d'utilisateurs dans une zone à l'intérieur d'un bâtiment, basé sur la collecte de messages de position pour déterminer et collecter des chemins suivis par les utilisateurs et permettant de générer un graphe permettant de calculer des trajets d'un point de départ vers une destination de la zone.

EP 2 148 167 A2 décrit également un procédé d'assistance au déplacement d'utilisateurs dans une zone à l'intérieur d'un bâtiment, basé sur une partition de la zone en carreaux ou en volumes élémentaires fournissant un maillage tridimensionnel de la zone.

US 2011/176523 A1 décrit la partition d'un espace intérieur en volumes élémentaires associés à des points d'accès (e.g. WiFi) basé sur des messages de localisation reçus d'un dispositif portable. Une base de données dans un serveur enregistre les positions et les volumes élémentaires associés.

## EXPOSE DE L'INVENTION

L'invention vise à remédier à tout ou partie des inconvénients de l'état de la technique identifiés ci-dessus, et notamment à proposer des moyens pour permettre de déterminer un itinéraire dans un environnement intérieur à la topologie changeante.

Dans ce dessein, un aspect de l'invention se rapporte à un procédé d'assistance au déplacement d'un agent, selon la revendication indépendante 1. Le procédé concerne un déplacement entre un premier point et un deuxième point dans une zone (100) prédéterminée le premier point et le deuxième point étant repérés par des coordonnées relatives à la zone prédéterminée, le procédé d'assistance comportant une étape de calcul d'un itinéraire entre le premier point et le deuxième point, le calcul de l'itinéraire s'effectuant à partir d'un graphe enregistré dans des moyens de stockage d'un serveur de graphe, l'itinéraire étant affiché sur un dispositif d'assistance comportant des moyens de géolocalisation produisant des coordonnées relatives à la zone prédéterminée, le procédé étant caractérisé en ce qu'il comporte les caractéristiques suivantes :

- Une étape préalable au calcul d'un itinéraire comportant les étapes suivantes :

    - Modélisation de la zone prédéterminée en volumes élémentaires et enregistrement de ces volumes élémentaires dans une base de données de zone,

- Une étape, réalisée en continue, par le dispositif d'assistance comportant les étapes suivantes :

    - Détermination de la position du dispositif d'assistance,
    - Production et émission d'un message de position, comportant au moins la position déterminée, vers le serveur de graphe

- Une étape, réalisée en continue, par le serveur de graphe comportant les étapes suivantes :

    - Réception d'un message de position
    - Mise à jour du graphe en fonction du message de position, la mise à jour étant l'association du message de position à un volume élémentaire dans la base de données de zone

- Une étape de calcul d'un itinéraire telle que :

    - Le graphe à utiliser pour le calcul d'itinéraire est extrait de la modélisation et est tel qu'à chaque volume élémentaire correspond un sommet du graphe, deux sommets sont reliés par un arc si leurs volumes élémentaires correspondants sont adjacents et si leurs volumes élémentaires sont associés à au moins un message de position.
    - Pour le calcul de l'itinéraire le premier point est associé à un premier volume élémentaire, le deuxième point est associé (1420) à un deuxième volume élémentaire le calcul de l'itinéraire se faisant entre les sommets associés au premier volume élémentaire et au deuxième volume élémentaire

Outre les caractéristiques principales qui viennent d'être mentionnées dans le paragraphe précédent, le procédé selon l'invention peut présenter une ou plusieurs caractéristiques complémentaires parmi les suivantes, considérées individuellement ou selon les combinaisons techniquement possibles:

- le volume élémentaire est un cube.
- le cube a une arrête d'une longueur comprise dans l'intervalle de 40 à 60 cm.
- lors du calcul d'un itinéraire à une première date, les messages de position étant daté, on ne considère que les messages de position dont l'âge, relativement à la première date, est inférieur à un premier seuil d'âge prédéterminée.
- si on ne parvient pas à déterminer un itinéraire alors on recommence un calcul en ne considérant que les messages de position dont l'âge, relativement à la première date, est inférieur à un deuxième seuil d'âge prédéterminé, le deuxième seuil d'âge étant supérieur au premier seuil d'âge.
- qu'un itinéraire calculé est recalculé en cours de parcours pour s'adapter aux variations topographiques de la zone prédéterminée.
- des coordonnées sont un identifiant d'un volume élémentaire, chaque volume élémentaire de la zone prédéterminée étant associé à un identifiant unique

L'invention se rapporte également à un dispositif de stockage numérique selon la revendication 8.

L'invention se rapporte également à un dispositif, selon la revendication 9, mettant en oeuvre le procédé selon une combinaison des caractéristiques précédentes

Le procédé peut déterminer l'utilisation de la fréquence de déplacement dans un cube élémentaire pour définir la possibilité d'utiliser ce cube comme chemin dans le cadre d'un calcul d'itinéraire.

Le procédé peut définir plusieurs zones de passages en fonctions des paramètres d'obsolescences et de fréquence de passage. On peut noter les zones de passages possibles, passages probables et passages impossibles.

## BREVE DESCRIPTION DES FIGURES

D'autres caractéristiques et avantages de l'invention ressortiront à la lecture de la description qui suit, en référence aux figures annexées, qui illustrent :

- la figure 1, une illustration de dispositif permettant la mise en oeuvre du procédé selon un mode de réalisation de l'invention ;
- la figure 2, une illustration d'étape du procédé selon l'invention ;
- la figure 3, une illustration d'une variante de géolocalisation utilisable par le procédé selon l'invention.

Pour plus de clarté, les éléments identiques ou similaires sont repérés par des signes de référence identiques sur l'ensemble des figures.

L'invention sera mieux comprise la lecture de la description qui suit et à l'examen des figures qui l'accompagnent. Celles-ci sont présentées à titre indicatif et nullement limitatif de l'invention.

## DESCRIPTION DETAILLEE D'UN MODE DE REALISATION

Lorsque l'on prête une action à un dispositif celle-ci est en fait effectuée par un microprocesseur du dispositif commandé par des codes instructions enregistrés dans une mémoire du dispositif. Si l'on prête une action à une application, celle-ci est en fait effectuée par un microprocesseur du dispositif dans une mémoire duquel les codes instructions correspondant à l'application sont enregistrés.

Parmi les dispositifs auquel on prête des actions il y a les ordinateurs et les serveurs. Il s'agit de dispositif fonctionnellement identique mais doté de caractéristique physique, par exemple en termes de tolérance aux pannes de composants, différentes. Dans cette description on emploi l'un ou l'autre des termes dans un but de clarification. Dans la pratique, doté d'application identique, un ordinateur et un serveur sont fonctionnellement équivalent donc interchangeables.

Lorsque l'on parle d'une action réalisée en continue, cela signifie que l'action s'effectue indépendamment d'une intervention d'un être humain. Il s'agit, par exemple, d'une tâche planifiée, d'un service informatique ou démon informatique réagissant à un évènement. Un événement est par exemple la réception d'un message via un réseau. Dans un contexte « en continu » on parle aussi de fil de l'eau ou de processus « machine à machine ».

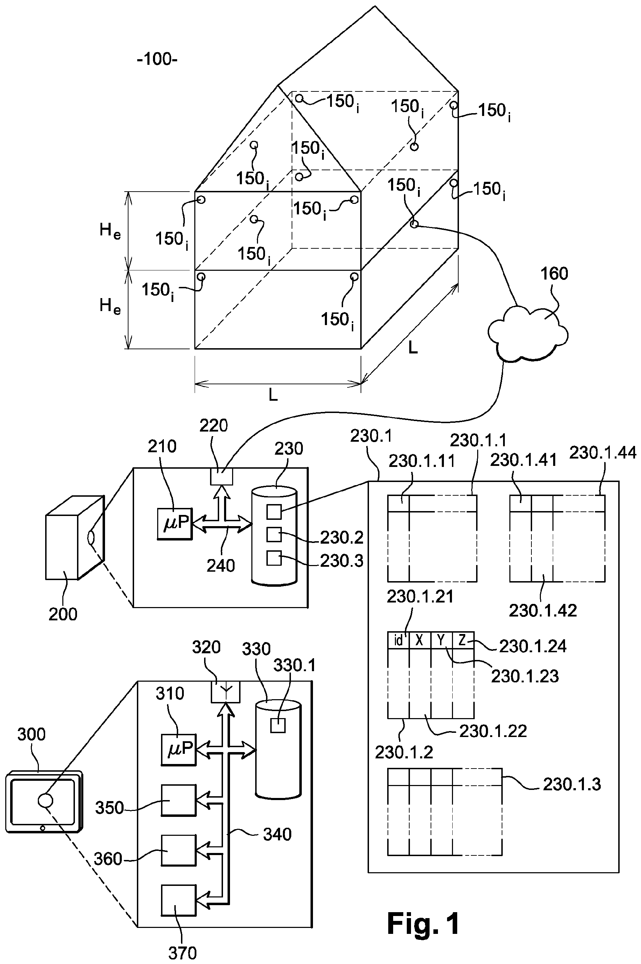

La figure 1 montre une zone 100 prédéterminée, par exemple un entrepôt 100, équipé d'un système de géolocalisation. L'entrepôt 100 est, par exemple, un bâtiment ayant une assise carré, le coté du carré L faisant 100 mètres, ainsi que NBe, égale à 2, étages d'une hauteur He de 5 mètre chacun.

Dans notre exemple on considère une modélisation de ce volume par un remplissage par un volume élémentaire cubique, un tel cube élémentaire ayant alors, par exemple, une arrête Cp de 0.5 mètre.

Dans cet exemple, l'entrepôt 100 est donc modélisé par :

$$(NBe * He * L * L) / Cp \char94 3 = 800\ 000$$

dans notre exemple.

La figure 1 montre également un serveur 200 de graphe, comportant :

- Un microprocesseur 210,
- Une interface 220 de communication, par exemple une carte Ethernet ou une carte Wifi,
- Des moyens 230 de stockage.

Le microprocesseur 210 du serveur 200 de graphe, l'interface 220 de communication du serveur 200 de graphe et les moyens 230 de stockage du serveur 200 de graphe sont interconnectés par un bus 240. Les moyens de stockage sont locaux, c'est-à-dire directement connectés au bus 240, ou distant, c'est-à-dire connectés via l'interface de communication.

La figure 1 montre que les moyens 230 de stockage du serveur 200 de graphe comporte une zone 230.1 base de données de zone permettant d'enregistrer la modélisation de la zone 100 prédéterminée. Dans notre exemple on considère une base de données relationnelle pour décrire des structures de données possibles utilisable pour la mise en oeuvre de l'invention. D'autre type de base de données sont utilisables parmi lesquels on cite de manière non limitative les bases de données dites « NoSQL ».

La base de données de zone comporte une table 230.1.1 de volumes élémentaires, chaque ligne de la table correspond à un volume élémentaire, ici un cube. Chaque ligne de la table comporte au moins une colonne 230.1.11 identifiant unique de volume élémentaire, ainsi que d'autres colonnes comportant des caractéristiques du volume élémentaire. Par la suite on illustrera qu'une ligne de la table 230.1.1 de volumes élémentaires, c'est-à-dire un volume élémentaire, peut être associé à d'autres lignes dans d'autres tables.

Dans une variante, la table 230.1.1 de volumes comporte huit colonnes supplémentaires, chaque colonne correspondant aux coordonnées des 8 sommets du cube dans un repère orthonormé lié à la zone 100 prédéterminée. Dans ce cas la table 230.1.1 de volumes permet de passer d'un identifiant de volume élémentaire à des coordonnées et vice et versa. D'autres variantes le permettent également.

Dans une autre variante, la table 230.1.1 de volumes élémentaires comporte 2 colonnes supplémentaires, une première colonne pour stocker les coordonnées d'un sommet du cube dans un repère orthonormé lié à la zone 100 prédéterminée, une deuxième colonne pour stocker la longueur de l'arrête du cube. Dans une sous variante, dans la mesure où toute les arrêtes de tous les cubes on la même longueur connue, cette deuxième colonne est facultative.

Dans encore une autre variante, la table 230.1.1 de volumes élémentaires ne comporte aucune colonne liée à la géométrie du volume, ces données se déduisant de l'identifiant du cube, cet identifiant étant attribué selon un ordre prédéterminé permettant, via des modulos, de calculer les coordonnées de ses sommets.

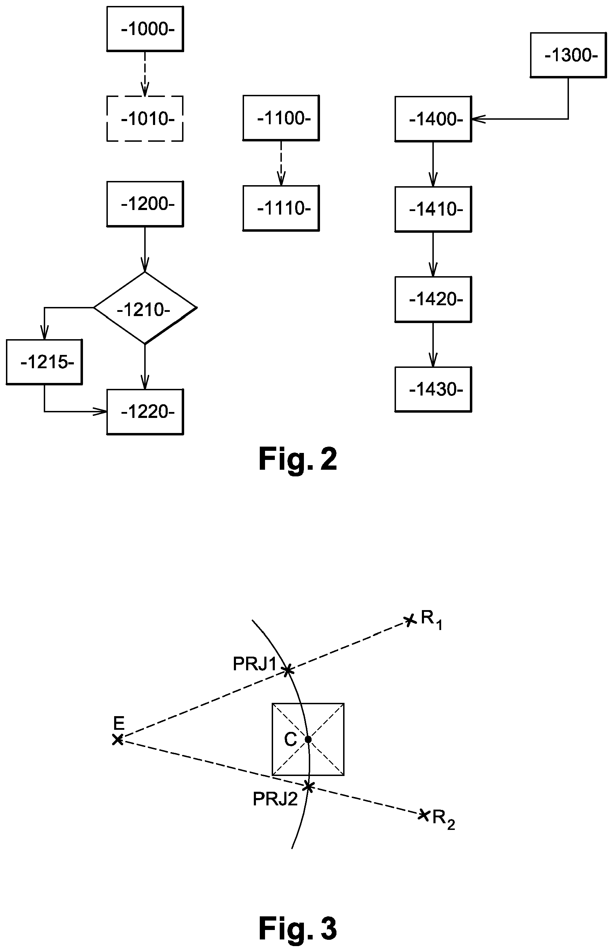

La figure 2 montre une étape 1000 dans laquelle on initialise la table 230.1.1 de volumes élémentaires de la base de données de zone du serveur de graphe. Cette initialisation se fait, par exemple, par trois boucles imbriquées, chaque boucle correspondant à une dimension de la zone prédéterminée.

La figure 1 montre également que la zone 100 prédéterminée est prééquipée d'une pluralité de dispositifs 150i radio, par exemple des bornes Wifi, disposées, par exemple, dans les coins supérieurs des étages ainsi qu'au milieu des arrêtes supérieures des étages. Il s'agit d'une disposition arbitraire. Associé à cette disposition la figure 1 montre que la base de données de zone comporte une table 230.1.2 de dispositifs radio comportant une liste de la pluralité de dispositif radio. A chaque dispositif radio de la pluralité de dispositifs radio correspond une ligne dans la table 230.1.2, chaque ligne comportant au moins :

- Un identifiant 230.1.21 de dispositif radio, par exemple un SSID,
- Un jeu de coordonnées X 230.1.22, Y 230.1.23, Z 230.1.24 dans un repère orthonormé lié à la zone prédéterminée.

Dans cette description il est évident que l'on ne considère qu'un repère orthonormé lié à la zone prédéterminé afin de garantir l'homogénéité des coordonnées cartésiennes utilisées.

Dans des variantes les dispositifs radios peuvent être plus nombreux et répartis plus irrégulièrement en fonction des équipements ou parois présents dans la zone prédéterminée.

La figure 1 montre aussi que le serveur 200 de graphe est connecté, via son interface de communication à un réseau 160, matérialisé par exemple par un switch, au moins un des dispositifs radio de la pluralité de dispositifs radio étant lui aussi connecté au dit réseau 160. Dans la mesure où les dispositifs radio sont connectés par radio, cela signifie que les dispositifs radio peuvent communiquer avec le serveur de graphe, cela signifie aussi que n'importe quel dispositif mobil connecté à un dispositif radio de la pluralité de dispositifs radio peut communiquer avec le serveur de graphe.

La figure 1 montre un dispositif 300 mobile apte à être utilisé par un agent se déplaçant dans la zone prédéterminée. Le dispositif 300 mobile comporte

- Un microprocesseur 310,
- Une interface 320 de communication, une carte Wifi,
- Des moyens 330 de stockage,
- Des moyens 350 inertiels, par exemple un accéléromètre
- Un altimètre 360,
- Une boussole 370,

Le microprocesseur 310 du dispositif 300 mobile, l'interface 320 de communication du dispositif 300 mobile et les moyens 330 de stockage du dispositif 300 mobile, les moyens 350 inertiels du dispositif 300 mobile, l'altimètre 360 du dispositif 300 mobile et la boussole 370 du dispositif 300 mobile sont interconnectés par un bus 340.

Via son interface de communication le dispositif 300 mobile peut :

- Se connecter à n'importe quel dispositif radio de la pluralité de dispositifs radio, et donc communiquer avec le serveur de graphe,
- Mesurer les puissances reçues de tous les dispositifs radio à sa portée.

Le dispositif 300 mobile, est aussi connecté ou comporte des moyens d'acquisition et de restitution vidéo. Ces moyens sont, par exemple, un écran et une caméra du dispositif 300 mobile ou, dans un autre exemple, des lunettes de réalité augmentée connectées au dispositif 300 mobile. L'ensemble formé par le dispositif 300 mobile et les moyens d'acquisition et de restitution vidéo forme un dispositif d'assistance.

La figure 1 montre que les moyens 330 de stockage du dispositif 300 mobile comporte une zone 330.1 adresse de serveur de graphe. Il s'agit d'un paramètre de configuration permettant au dispositif 300 mobile de communiquer avec le serveur de graphe. Dans une variante de l'invention dans laquelle le dispositif mobile obtient une adresse réseau dynamiquement, ce paramètre d'adresse est obtenu en même temps que l'adresse dynamique, ou il est décidé que ce paramètre est égal à l'adresse du serveur servant l'adresse dynamique. Dans ce cas le serveur de graphe joue aussi le rôle de serveur DHCP.

La figure 2 montre une étape 1100 de détermination de position du dispositif 300 mobile. Le préalable à cette détermination est la mesure des puissances reçues par les dispositifs radio, de la pluralité de dispositif radio, à portée du dispositif mobile, en particulier des puissances des émissions correspondant à la norme Wifi. Chaque puissance est associée à un identifiant de dispositif radio. Il s'agit en fait d'un scan des réseaux Wifi disponibles. Ce scan est effectué en permanence.

A partir de là il y a deux possibilité : soit le dispositif 300 mobile fait les calculs lui-même, soit il émet ses mesures pour qu'un autre dispositif fasse les calculs à sa place et lui renvoie ses coordonnées en réponse. Les coordonnées sont le résultat des calculs.

Dans le premier cas il faut que le dispositif mobile ait une copie de la table 230.1.2 de dispositifs radio. A partir de là, en fonction des puissances reçues il est capable de déterminer à quelle distance de chaque dispositif radio de la pluralité de dispositifs radio il se trouve. La distance est une fonction de la puissance reçue connaissant la puissance émise. Cette puissance émise est, soit émise par le dispositif radio, soit enregistrée dans une colonne supplémentaire de la table 230.1.2 de dispositifs radio.

Une fois les distances connues il suffit de calculer l'intersection des sphères ayant pour centres les dispositifs radio. Le résultat donne les coordonnées du dispositif 300 mobile au moment où il a fait les mesures de puissance. Ces calculs sont connus sous le nom de triangulation.

Une fois les coordonnées calculées le dispositif 300 mobile passe à une étape 1110 de production et d'émission d'un message de position. Un message de position comporte au moins et hors les champs propres au protocole de communication :

- Un code prédéterminé permettant de déterminer la nature du message ;
- Une date de calcul ;
- Les coordonnées calculées.

Une fois produit le message est émis vers le serveur de graphe dont l'adresse est connue via la zone adresse de serveur de graphe des moyens de stockage du dispositif 300 mobile.

Dans un deuxième cas les mesures de puissance sont émises, par exemple vers le serveur de graphe. On note que n'importe quel appareil ayant une copie de la table 230.1.2 de dispositifs radio est capable de faire les calculs.

Dans ce deuxième cas, de préférence, les puissances sont émises accompagnées d'une date de mesure.

Le dispositif qui reçoit ces mesures effectue les calculs de triangulation, produit un message de position comportant les résultats du calcul, et envoie le message de position produit au dispositif 300 mobile.

Dans une variante par requête de l'invention l'étape 1000 de modélisation est suivie d'une étape 1010 de calibrage. Dans l'étape de calibrage on associe à chaque volume élémentaire, via une table 230.1.3 de puissances attendues, les puissances que l'on devrait recevoir pour chaque dispositif radio de la pluralité de dispositifs radio. Un mode de calibrage est le suivant à la figure 3.

La table 230.1.3 comporte :

- Une colonne 230.1.31 identifiant de volume élémentaire,
- Une colonne 230.1.32 identifiant de dispositif radio,
- Une colonne 230.1.33 puissance reçue.

La colonne 230.1.33 peut être renseigné en faisant des mesures, ce qui risque d'être fastidieux ou par calculs comme décrit dans un exemple qui suit.

La figure 3 montre, en projection dans un plan horizontal un cube dont on considère le centre géométrique C. On parle du cube C.

La figure 3 montre également trois dispositifs radio un premier dispositif radio E, un deuxième dispositif radio R1 et un deuxième dispositif radio R2.

Dans la mesure où les coordonnées du cube C et des premier, deuxième et troisième dispositifs radio sont connues on peut calculer :

- dec = distance entre le premier dispositif radio E et le cube C ;
- der1 = distance entre le premier dispositif radio E et le deuxième dispositif radio R1 ;
- der2 = distance entre le premier dispositif radio E et le troisième dispositif radio R2 ;

Le deuxième dispositif radio R1 mesure 11, la puissance qu'il reçoit du premier dispositif radio E. Le troisième dispositif radio R2 mesure I2, la puissance qu'il reçoit du premier dispositif radio E.

A partir de là il est possible de calculer des puissances projetées radialement c'est-à-dire :

- une puissance Iprj1 reçu au point Prj1 d'intersection d'une sphère de rayon dec et de centre C et d'une droite passant par les premier et deuxième dispositifs radio.

$$Iprj1 = dec * I1 / der1$$

- une puissance Iprj2 reçu au point Prj2 d'intersection d'une sphère de rayon dec et de centre C et d'une droite passant par les premier et troisième dispositifs radio.

$$Iprj2 = dec * I2 / der2$$

Par des considérations géométriques il est également possible de calculer les distances

-
$$dp1c = \text{distance entre Prj1 et C}$$
$$= ((Prj1.x - C.x)^2 + (Prj1.y - C.y)^2 + (Prj1.z - C.z)^2)^{(1/2)}$$

-
$$dp2c = \text{distance entre Prj2 et C}$$
$$= ((Prj2.x - C.x)^2 + (Prj2.y - C.y)^2 + (Prj2.z - C.z)^2)^{(1/2)}$$

-

$$\text{dp1p2} = \text{distance entre Prj1 et Prj2}$$

$$= ((\text{Prj2.x} - \text{Prj1.x})^2 + (\text{Prj2.y} - \text{Prj1.y})^2 + (\text{Prj2.z} - \text{Prj1.z})^2)^{(1/2)}$$

Alors la puissance Ice reçu en C depuis le premier dispositif radio est donnée par la formule :

$$Ice = \frac{dp1p2 - dp1c}{dp1p2} * Iprj1 + \frac{dp1p2 - dp2c}{dp1p2} * Iprj2$$

Par cette méthode on est donc capable d'associé à chaque cube une puissance reçue calibrée pour chaque dispositif radio de la pluralité de dispositif radio.

Le calibrage peut être relancé régulièrement pour tenir compte des modifications des conditions de propagation dans la zone prédéterminée. Ces modifications de condition de propagation correspondent, la plus part du temps, à une modification de la topographie de la zone prédéterminée. Par exemple on a ajouté ou déplacé des rayonnages.

Dans la variante par requête la géolocalisation de l'étape 1100 de détermination d'une position se fait par l'émission d'un message de mesure comportant des puissances mesurées associées à des dispositifs radio. Ce message est émis vers le serveur de zone. Le serveur de zone effectue alors une requête dans la base de données 230.1 de zone, et en particulier dans la table 230.1.3 de puissances attendues pour y trouver l'identifiant de cube correspondant aux puissances mesurées. Le serveur de zone renvoie alors un message correspondant à la position du dispositif mobile qui a effectué les mesures de puissance.

Un message de mesure comporte au moins, indépendamment des champs liés au protocole d'acheminement, les champs suivants :

- Un champ code identifiant le message comme un message de mesures,
- Une date à laquelle ont été faites les mesures
- Une liste de mesures, chaque mesure comportant :

    - Un identifiant d'un dispositif radio de la pluralité de dispositifs radio,
    - Une valeur de puissance mesurée.

Du point de vue du serveur de zone, un message de mesure et équivalent à un message de position dans la mesure où les deux messages indique la présence d'un dispositif mobile à des coordonnées dans la zone prédéterminée.

Quel que soit la variante les étapes 1100 de détermination de position et 1110 de production et d'émission d'un message de position sont effectuées en continue par le dispositif 300 mobile dans la zone prédéterminée. On aura compris que selon la variante l'étape 1110 est facultative, en particulier dans les variantes dans lesquelles le dispositif mobile ne fait que les mesures de puissance.

Ces étapes sont, par exemple, effectuées à une fréquence prédéterminée. Cette fréquence peut évoluer dans le temps en fonction de mesures inertielles : la fréquence augmente en cas d'accélération du déplacement et diminue dans le cas contraire. Cette fréquence peut aussi être liée à une vitesse de déplacement moyenne estimée. Par exemple, pour une vitesse moyenne de 1 m/s, cette fréquence pourrait être d'au moins 4hz pour garantir au moins une mesure par volume élémentaire dans l'exemple choisi.

La figure 2 montre une étape 1200 réalisée en continue par le serveur 200 de zone. Cette étape est une étape d'écoute du réseau pour y détecter des messages de position ou des messages équivalents tel que des messages de mesures. Si un tel message est détecté alors on passe à une étape 1210 d'aiguillage selon la nature du message. Si le message est un message de position on passe à une étape 1220 de mise à jour de graphe, sinon on passe à une étape 1215 de calcul d'une position c'est-à-dire à une géolocalisation en fonction d'une liste de puissances mesurées. De l'étape 1215 on passe à l'étape 1220 de mise à jour du graphe.

L'étape 1215 de géolocalisation a déjà été décrite précédemment, il s'agit du cas où seules les mesures sont effectuées par le dispositif 300 mobiles, les calculs étant confié au serveur 200 de zone.

Dans l'étape 1220 le serveur 200 de zone a reçu un message qui lui permet d'obtenir une date, et une géolocalisation dans la zone prédéterminée.

A partir de la géolocalisation le serveur 200 interroge la table de volumes élémentaires de la base de données de zone pour obtenir un identifiant de volume élémentaire.

Une fois l'identifiant de volume élémentaire obtenu, le serveur 200 de zone insère une ligne dans une table 230.1.4 de traçage.

La table 230.1.4 de traçage comporte au moins :

- Une colonne 230.1.41 identifiant de volume élémentaire
- Une colonne 230.1.42 date.

Dans la nouvelle ligne de la table de traçage le serveur 200 écrit :

- l'identifiant de volume élémentaire obtenu dans la colonne identifiant de volume élémentaire,
- la date du message, date de géolocalisation ou date de mesures, dans la colonne date.

La nouvelle ligne ainsi obtenue indique qu'il y a eu un passage à une date donnée dans un volume élémentaire donné. La table de traçage permet d'effectuer un suivi des déplacements, de conserver une trace de passages possibles. Une ligne est ici équivalente à un message de position. C'est donc cette table de traçage qui comporte la topologie de la zone prédéterminée et qui la suit en temps réel, pour peu que des agents muni de dispositif mobile selon l'invention s'y déplace.

La figure 2 montre une étape 1300 dans laquelle un utilisateur du dispositif 300 mobile demande un itinéraire entre deux coordonnées dans la zone prédéterminée.

Une telle demande se traduit par la production d'un message de demande de calcul d'un itinéraire. Un message de demande de calcul d'un itinéraire comporte au moins, en plus des champs requis par le protocole d'acheminement, les champs suivants :

- Un champ code identifiant le message comme une demande de calcul d'itinéraire,
- Un champ début d'itinéraire, il s'agit soit de coordonnées cartésiennes, soit s'un identifiant de volume élémentaire,
- Un champ fin d'itinéraire, il s'agit soit de coordonnées cartésiennes

Dans une variante le message de demande de calcul d'un itinéraire comporte un champ affectation qui comporte un identifiant de dispositif mobile. Cette variante permet à un tiers d'envoyer un itinéraire à un dispositif mobile, car une fois que l'itinéraire aura été calculé, il sera envoyé vers le dispositif mobile identifié par le champ affectation.

La valeur du champ début d'itinéraire prend, par exemple, la valeur de la position courante du dispositif 300 mobile.

La valeur du champ fin d'itinéraire est, par exemple, obtenu grâce à une référence article qui est transformée en coordonnées via une requête émise vers une base de données d'article qui aura été préalablement initialisée pour associé à chaque référence d'article dans la zone prédéterminée des coordonnées.

Dans une variante, le message de demande de calcul comporte au moins un champ étape intermédiaire comportant des coordonnées d'une étape intermédiaire.

Le message une fois constitué est envoyé vers un dispositif de calcul d'itinéraire. Dans notre exemple il s'agit du serveur 200 de graphe. Dans la pratique il s'agit de n'importe quel dispositif disposant d'un graphe adapté.

Une fois le message de demande d'itinéraire produit il est émis vers le serveur 200 de zone.

Dans une étape 1400 de réception d'un message de calcul d'itinéraire, si le message est identifié comme tel, alors il passe à une étape 1410 d'extraction d'un graphe.

Dans l'étape 1410 le serveur 200 de zone utilise un premier paramètre d'âge ayant une valeur prédéterminé, par exemple 2 jours. Ce premier paramètre d'âge est enregistré dans une zone 230.2 des moyens de stockage du serveur 200 de zone.

A partir de ce premier paramètre d'âge le serveur 200 filtre les lignes de la table 230.1.4 de traçage de manière à ne conserver que celles dont l'âge est inférieur au premier paramètre d'âge. L'âge d'une ligne est la différence entre la date courante et la date stockée dans la ligne. On obtient ainsi une première liste de lignes.

Un premier graphe est alors tel qu'à chaque volume élémentaire correspond un sommet du premier graphe, deux sommets sont reliés par un arc si leurs volumes élémentaires correspondants sont adjacents et si leurs volumes élémentaires sont associés à au moins une ligne dans la première liste.

Dans une variante de l'invention, la valeur du premier paramètre d'âge est équivalente à l'infini, ce qui revient à considérer toutes les traces ou ligne de la table de traçage.

Dans une étape 1420 de suivant l'étape 1400, le serveur 200 de zone convertit, si besoin, les coordonnées contenues dans le message de calcul d'itinéraire en identifiant de volume élémentaire, c'est-à-dire en identifiant de sommet du premier graphe. On obtient ainsi une liste de sommet étape.

Dans une étape 1430 de calcul d'un itinéraire suivant les étapes d'extraction du premier graphe et de conversion des coordonnées, le serveur 200 de zone est en connaissance d'un graphe et d'une liste de sommets étapes de ce graphe. Le serveur 200 de zone peut donc calculer un itinéraire, c'est-à-dire une séquence de sommets adjacents du graphe comportant la liste se sommets étapes en utilisant, par exemple, un algorithme de dijkstra qui est l'algorithme de traitement de graphe le plus efficace à la date de rédaction de cette description.

Si aucun itinéraire n'est trouvé alors on recommence le calcul à partir d'un deuxième graphe extrait en filtrant les lignes de la table 230.1.4 de traçage de manière à ne conserver que celles dont l'âge est inférieur à un deuxième paramètre d'âge. Le deuxième paramètre d'âge est enregistré dans une zone 230.3 deuxième paramètre d'âge des moyens de stockage du serveur 200 de zone. On obtient ainsi une deuxième liste de lignes. La valeur du deuxième paramètre d'âge est strictement supérieure à la valeur du premier paramètre d'âge.

Dans le cas du premier calcul, s'il aboutit, on obtient un itinéraire plus fiable car basé sur des données plus récentes.

Une fois calculé, l'itinéraire est envoyé au dispositif qui en a fait la demande ou au dispositif désigné dans le message de calcul d'itinéraire via le champ affectation.

Une étape non représentée, l'itinéraire est visualisée sur le dispositif 300 mobile via les moyens de restitution vidéo.

L'utilisateur du dispositif 300 peut alors suivre l'itinéraire et sa progression sur les moyens de restitution vidéo.

Dans une variante de l'invention, lorsque l'utilisateur suit un itinéraire calculé, le dispositif 300 mobile émet, à intervalle régulier, des demande de calcul d'itinéraire ayant comme origine/début la position courante du dispositif 300 mobile et comme arrivée/fin le point d'arrivé de l'itinéraire en cours d'exécution. En réponse le dispositif mobile reçoit un itinéraire qui peut être différent de l'itinéraire en cours d'exécution. Dans ce cas, c'est ce nouvel itinéraire qui est alors suivi.

Cette variante permet à l'invention de s'adapter en temps réel aux modifications de topologie de la zone prédéterminée.

Dans l'invention les coordonnées échangées sont soit des coordonnées cartésiennes, soit des identifiants de volume élémentaire, la table de volume élémentaire permettant de passer de l'une à l'autre.

Dans une variante de l'invention, la base de données de zone comporte également une table permettant de stocker, pour chaque dispositif radio de la pluralité de dispositifs radio la puissance qu'il devrait recevoir de tous les autres dispositifs radio ainsi que la puissance qu'il reçoit effectivement. La puissance qu'il devrait recevoir est une donnée de calibrage fixé à une date donnée pour une durée longue de l'ordre de la semaine ou du mois. La puissance effectivement reçue est une donnée rafraîchie sur une période courte de l'ordre de la minute ou de l'heure. Dans cette variante on est donc capable de prendre en compte les modifications des conditions de propagation d'ondes dans la zone prédéterminée.

Cette connaissance, notamment lorsque la puissance effective est différente de la puissance attendue, permet de pondérer l'influence des dispositifs radio concernés dans les étapes de géolocalisation. Notamment cette connaissance permet de corriger linéairement des mesures de puissance selon un coefficient égal au rapport de la puissance effective sur la puissance attendue.

Une reformulation de l'invention est donc qu'elle permet de calculer un itinéraire sur un graphe dynamique. La graphe est dynamique car il est extrait de la table de traçage qui évolue en fonction des déplacements des agents dans la zone prédéterminée. Chaque agent participe donc à la réalisation de la cartographie de la zone prédéterminée.

## Revendications

1. Procédé d'assistance au déplacement d'un agent entre un premier point et un deuxième point dans un intérieur d'une zone (100) prédéterminée, la zone prédéterminée étant un bâtiment, le premier point et le deuxième point étant repérés par des coordonnées relatives à la zone prédéterminée, le procédé d'assistance comportant une étape de calcul d'un itinéraire entre le premier point et le deuxième point, le calcul de l'itinéraire s'effectuant à partir d'un graphe enregistré dans des moyens de stockage d'un serveur de graphe, l'itinéraire étant affiché sur un dispositif d'assistance comportant des moyens de géolocalisation produisant des coordonnées relatives à la zone prédéterminée, le procédé étant **caractérisé en ce qu'**il comporte les caractéristiques suivantes :

    - Une étape (1000) préalable au calcul d'un itinéraire comportant les étapes suivantes :

        - Modélisation (1000) de la zone prédéterminée en volumes élémentaires et enregistrement de ces volumes élémentaires dans une base de données de zone,

    - Une étape, réalisée en continu, par le dispositif d'assistance comportant les étapes suivantes :

        - Détermination (1100) de la position du dispositif d'assistance,
        - Production et émission (1110) d'un message de position, comportant au moins la position déterminée, vers le serveur de graphe,

- Une étape, réalisée en continu, par le serveur de graphe comportant les étapes suivantes :

    - Réception (1200) d'un message de position,
    - Mise à jour (1220) du graphe en fonction du message de position, la mise à jour étant l'association du message de position à un volume élémentaire dans la base de données de zone,

- Une étape (1300) de calcul d'un itinéraire telle que :

    - Un graphe à utiliser pour le calcul d'itinéraire est extrait (1410) de la modélisation et est tel qu'à chaque volume élémentaire correspond un sommet du graphe, deux sommets étant reliés par un arc si leurs volumes élémentaires correspondants sont adjacents et si leurs volumes élémentaires sont associés à au moins un message de position,
    - Pour le calcul (1430) de l'itinéraire le premier point est associé (1420) à un premier volume élémentaire, le deuxième point est associé (1420) à un deuxième volume élémentaire, le calcul de l'itinéraire se faisant entre les sommets associés au premier volume élémentaire et au deuxième volume élémentaire.

2. Procédé d'assistance au déplacement selon la revendication 1, **caractérisé en ce que** le volume élémentaire est un cube.

3. Procédé d'assistance au déplacement selon la revendication 2, **caractérisé en ce que** le cube a une arête d'une longueur comprise dans l'intervalle compris entre 40 et 60 cm.

4. Procédé d'assistance au déplacement selon l'une des revendications précédentes, dans lequel, lors du calcul d'un itinéraire à une première date, les messages de position étant datés, on ne considère que les messages de position dont l'âge, relativement à la première date, est inférieur à un premier seuil d'âge prédéterminé.

5. Procédé d'assistance au déplacement selon la revendication 4, **caractérisé en ce que** si on ne parvient pas à déterminer un itinéraire, alors on recommence un calcul en ne considérant que les messages de position dont l'âge, relativement à la première date, est inférieur à un deuxième seuil d'âge prédéterminé, le deuxième seuil d'âge étant supérieur au premier seuil d'âge.

6. Procédé d'assistance au déplacement selon l'une des revendications précédentes, **caractérisé en ce qu'**un itinéraire calculé est recalculé en cours de parcours pour s'adapter aux variations topographiques de la zone prédéterminée.

7. Procédé selon l'une des revendications précédentes, **caractérisé en ce que** des coordonnées sont un identifiant d'un volume élémentaire, chaque volume élémentaire de la zone prédéterminée étant associé à un identifiant unique.

8. Dispositif de stockage numérique comportant un fichier correspondant à des codes instructions mettant en oeuvre le procédé selon l'une des revendications précédentes, lorsque les instructions sont exécutées par un processeur d'ordinateur.

9. Dispositif pour la mise en oeuvre du procédé selon l'une des revendications 1 à 7 comportant :

    - Un serveur de graphe (200) configuré pour :

        - Enregistrer une base de données de graphe de volume élémentaire ;
        - Recevoir des messages de position ;
        - Mettre à jour la base de données de graphe en fonction des messages reçus ;
        - Calculer un itinéraire ;

    - Un dispositif (300) mobile configuré pour :

        - Déterminer sa position ;
        - Emettre un message correspondant à sa position.

**Patentansprüche**

1. Verfahren zum Unterstützen der Bewegung eines Agenten zwischen einem ersten Punkt und einem zweiten Punkt in einem Innenraum einer vorgegebenen Zone (100), wobei die vorgegebene Zone ein Gebäude ist, wobei der erste Punkt und der zweite Punkt durch Koordinaten relativ zu der vorbestimmten Zone identifiziert werden, wobei das Unterstützungsverfahren einen Schritt eines Berechnens einer Wegstrecke zwischen dem ersten Punkt und dem zweiten Punkt umfasst, wobei das Berechnen der Wegstrecke von einem Graphen ausgeht, der in Speichermitteln eines Graphenservers aufgezeichnet ist, wobei die Wegstrecke auf einer Unterstützungsvorrichtung angezeigt wird, die Mittel für eine Geolokalisierung umfasst, die Koordinaten relativ zu der vorgegebenen Zone erzeugen, wobei das Verfahren **dadurch gekennzeichnet ist, dass** es die folgenden Merkmale umfasst:

   - einen Schritt (1000) vor dem Berechnen einer Wegstrecke, umfassend die folgenden Schritte:

      - Modellieren (1000) der vorgegebenen Zone in Elementarvolumina und Aufzeichnen dieser Elementarvolumina in einer Zonendatenbank,

   - einen Schritt, der kontinuierlich von der Unterstützungsvorrichtung ausgeführt wird, umfassend die folgenden Schritte:

      - Bestimmen (1100) der Position der Unterstützungsvorrichtung,
      - Erzeugen und Übermitteln (1110) einer Positionsmeldung, die mindestens die bestimmte Position umfasst, an den Graphenserver,

   - einen Schritt, der kontinuierlich durch den Graphenserver ausgeführt wird, umfassend die folgenden Schritte:

      - Empfangen (1200) einer Positionsmeldung,
      - Aktualisieren (1220) des Graphen in Abhängigkeit von der Positionsmeldung, wobei das Aktualisieren die Zuordnung der Positionsmeldung zu einem Elementarvolumen in der Zonendatenbank ist,

   - einen Schritt (1300) zum Berechnen einer Wegstrecke wie:

      - ein für das Berechnen der Wegstrecke zu verwendender Graph wird aus der Modellierung extrahiert (1410) und ist derart, dass jedes Elementarvolumen einem Scheitelpunkt des Graphen entspricht, wobei zwei Scheitelpunkte durch einen Bogen verbunden sind, wenn ihre entsprechenden Elementarvolumina benachbart sind und wenn ihre Elementarvolumina mindestens einer Positionsmeldung zugeordnet sind,
      - für das Berechnen (1430) der Wegstrecke wird der erste Punkt einem ersten Elementarvolumen zugeordnet (1420), der zweite Punkt wird einem zweiten Elementarvolumen zugeordnet (1420), wobei das Berechnen der Wegstrecke zwischen den dem ersten Elementarvolumen und dem zweiten Elementarvolumen zugeordneten Scheitelpunkten durchgeführt wird.

2. Verfahren zum Unterstützen der Bewegung nach Anspruch 1,
   **dadurch gekennzeichnet, dass** das Elementarvolumen ein Würfel ist.

3. Verfahren zum Unterstützen der Bewegung nach Anspruch 2,
   **dadurch gekennzeichnet, dass** der Würfel eine Kante mit einer Länge aufweist, die in der Messspanne zwischen 40 und 60 cm liegt.

4. Verfahren zum Unterstützen der Bewegung nach einem der vorstehenden Ansprüche, wobei während dem Berechnen einer Wegstrecke zu einem ersten Datum die Positionsmeldungen datiert werden, wobei nur die Positionsmeldungen berücksichtigt werden, deren Alter relativ zu dem ersten Datum unter einer ersten vorgegebenen Altersschwelle liegt.

5. Verfahren zum Unterstützen der Bewegung nach Anspruch 4,
   **dadurch gekennzeichnet, dass** falls es nicht gelingt, eine Wegstrecke zu bestimmen, ein Berechnen neu gestartet wird, bei dem nur die Positionsmeldungen berücksichtigt werden, deren Alter relativ zu dem ersten Datum kleiner als eine zweite vorgegebene Altersschwelle ist, wobei die zweite Altersschwelle höher als die erste Altersschwelle ist.

6. Verfahren zum Unterstützen der Bewegung nach einem der vorstehenden Ansprüche, **dadurch gekennzeichnet,**

**dass** eine berechnete Wegstrecke für eine Anpassung an die topografischen Veränderungen der vorgegebenen Zone während eines Verlaufs neu berechnet wird.

7. Verfahren nach einem der vorstehenden Ansprüche,
**dadurch gekennzeichnet, dass** Koordinaten eine Kennung eines Elementarvolumens sind, wobei jedem Elementarvolumen der vorgegebenen Zone eine eindeutige Kennung zugeordnet ist.

8. Digitale Speichervorrichtung, umfassend eine Datei, die Befehlscodes entspricht, die das Verfahren nach einem der vorstehenden Ansprüche implementieren, wenn die Befehle durch einen Computerprozessor ausgeführt werden.

9. Vorrichtung zum Implementieren des Verfahrens nach einem der Ansprüche 1 bis 7, umfassend:

   - einen Graphenserver (200), der konfiguriert ist zum:

      - Aufzeichnen einer Elementarvolumengraphendatenbank;
      - Empfangen von Positionsmeldungen;
      - Aktualisieren der Graphendatenbank in Abhängigkeit von den erhaltenen Meldungen;
      - Berechnen einer Wegstrecke;

   - eine bewegliche Vorrichtung (300), die konfiguriert ist zum:

      - Bestimmen ihrer Position;
      - Übermitteln einer ihrer Position entsprechenden Meldung.

**Claims**

1. A method for assisting the movement of an agent between a first point and a second point in an interior of a predetermined zone (100), the predetermined zone being a building, the first point and the second point being identified by coordinates relating to the predetermined zone, the assistance method comprising a step of calculating a route between the first point and the second point, the route being calculated based on a graph stored in storage means of a graph server, the route being displayed on an assistance device comprising geolocation means producing coordinates relating to the predetermined zone, the method being **characterized in that** it comprises the following features:

   - a step (1000) prior to the calculation of a route comprising the following steps:

      - modeling (1000) the predetermined zone as elementary volumes and storing these elementary volumes in a zone database;

   - a step carried out continuously by the assistance device comprising the following steps:

      - determining (1100) the position of the assistance device;
      - producing and transmitting (1110) a position message, comprising at least the determined position, to the graph server;

   - a step carried out continuously by the graph server comprising the following steps:

      - receiving (1200) a position message;
      - updating (1220) the graph according to the position message, the update being the association of the position message with an elementary volume in the zone database;

   - a step (1300) of calculating a route such that:

      - a graph to be used for the route calculation is extracted (1410) from the model and is such that a vertex of the graph corresponds to each elementary volume, two vertices being connected by an arc if their corresponding elementary volumes are adjacent and if their elementary volumes are associated with at least one position message;

- to calculate (1430) the route, the first point is associated (1420) with a first elementary volume, the second point is associated (1420) with a second elementary volume, the route being calculated between the vertices associated with the first elementary volume and with the second elementary volume.

2. The movement assistance method as claimed in claim 1,
**characterized in that** the elementary volume is a cube.

3. The movement assistance method as claimed in claim 2,
**characterized in that** the cube has an edge with a length in the range of between 40 cm and 60 cm.

4. The movement assistance method as claimed in one of the preceding claims, wherein, when calculating a route on a first date, the position messages being dated, only those position messages with an age, relative to the first date, lower than a first predetermined age threshold are considered.

5. The movement assistance method as claimed in claim 4,
**characterized in that** if it is not possible to determine a route, then a calculation is started again with only those position messages with an age, relative to the first date, lower than a second predetermined age threshold being considered, the second age threshold being higher than the first age threshold.

6. The movement assistance method as claimed in one of the preceding claims, **characterized in that** a calculated route is recalculated during travel in order to adapt to the topographical variations of the predetermined zone.

7. The method as claimed in one of the preceding claims,
**characterized in that** coordinates are an identifier of an elementary volume, each elementary volume of the predetermined zone being associated with a unique identifier.

8. A digital storage device comprising a file corresponding to code instructions for implementing the method as claimed in one of the preceding claims when the instructions are executed by a computer processor.

9. A device for implementing the method as claimed in one of claims 1 to 7, comprising:

   - a graph server (200) configured to:

     - save an elementary volume graph database;
     - receive position messages;
     - update the graph database according to the received messages;
     - calculate a route;

   - a mobile device (300) configured to:

     - determine its position;
     - send a message corresponding to its position.

**Fig. 1**

**Fig. 2**

**Fig. 3**

**EP 3 123 111 B1**

## RÉFÉRENCES CITÉES DANS LA DESCRIPTION

**Documents brevets cités dans la description**

- US 2011081922 A1
- US 8320939 B1
- EP 2148167 A2
- US 2011176523 A1